# EUROPÄISCHE PATENTSCHRIFT

(11) **EP 0 915 765 B1**
(45) Veröffentlichungstag und Bekanntmachung des Hinweises auf die Patenterteilung: **02.01.2002**
(21) Anmeldenummer: 97937501.1
(22) Anmeldetag: 18.07.1997
(51) Int. Cl.: B60C 23/04

(54) **VORRICHTUNG ZUR REIFENDRUCKKONTROLLE AN AUTOMOBILEN MIT EINER BATTERIEBETRIEBENEN SCHALTUNG**
DEVICE FOR CONTROLLING THE TYRE PRESSURE OF AUTOMOBILES BY MEANS OF A BATTERY-POWERED CIRCUIT
DISPOSITIF DE CONTROLE DE LA PRESSION DE PNEUS MONTES SUR DES AUTOMOBILES, AU MOYEN D'UN CIRCUIT ALIMENTE PAR UNE BATTERIE

(30) Priorität: 07.08.1996 DE 19631784
(43) Veröffentlichungstag der Anmeldung: 19.05.1999
(73) Patentinhaber: Beru AG, 71636 Ludwigsburg (DE)
(72) Erfinder: NORMANN, Norbert, D-75223 Niefern-Öschelbronn (DE); SCHULZE, Gunter, Lothar, D-75228 Ispringen (DE); UHL, Günter, D-74921 Helmstadt-Bargen (DE)
(74) Vertreter: Twelmeier, Ulrich, Dipl. Phys.
(86) Internationale Anmeldenummer: EP9703849
(87) Internationale Veröffentlichungsnummer: WO9805519

(56) Entgegenhaltungen:
- WO-A-93/16891
- US-A- 3 859 628
- US-A- 4 006 326
- US-A- 4 734 674

## Beschreibung

Die Erfindung geht aus von einer Vorrichtung mit den im Anspruch 1 angegebenen Merkmalen. Eine solche Vorrichtung ist aus der WO 93/16891 bekannt und arbeitet mit einer am jeweiligen Rad angebrachten "Radelektronik" zusammen, welche einen Drucksensor, eine Schaltung zur Verarbeitung des Druckmeßsignals, einen Sender mit Sendeantenne und eine Batterie enthält. Die Radelektroniken senden ihre Druckmeßdaten an eine oder mehrere Empfangsantennen, welche mit einem gemeinsamen Steuergerät in der Karosserie verbunden sind, welches einen Empfänger, eine Auswerteschaltung und eine Anzeigeeinheit enthält. Die Radelektroniken senden ihre Signale in regelmäßigen Zeitabständen an das zentrale Steuergerät und beziehen die für das Betreiben des Druckmeßfühlers, der Schaltung zur Verarbeitung des Druckmeßsignals und für den Sender erforderliche Energie aus der Batterie, für welche eine möglichst lange Betriebszeit im Automobil (7 bis 10 Jahre) angestrebt wird. Um das zu erreichen, ist zum einen dafür zu sorgen, daß der Stromverbrauch für das Betreiben der Radelektronik so gering wie möglich ist. Ein besonderes Problem ergibt sich dadurch, daß wegen der Montage der Radelektronik am Rad, insbesondere im Luftraum des Reifens als Fortsatz des Ventils liegend, die gesamte Elektronikeinheit einschließlich der Batterie aus konstruktiven Gründen und aus Gründen der Betriebssicherheit hermetisch gekapselt, vorzugsweise vollständig mit einer Vergußmasse umhüllt sein soll. Das bedeutet, daß nach der Endmontage der Radelektronik die Batterie mit ihren Verbrauchern verbunden ist und der Batterie in den vorgesehenen Druckmeß- und Sendezyklen selbst dann Strom entnommen wird, wenn die Radelektronik nicht sofort zum Einsatz im Automobil kommt, sondern zunächst einmal, z.B. als Ersatzteil, im Lager aufbewahrt wird, was durchaus für ein oder zwei Jahre der Fall sein kann. Die spätere Betriebszeit im Automobil wird deshalb um die Lagerzeit verkürzt, was unerwünscht ist.

Der vorliegenden Erfindung liegt die **Aufgabe** zugrunde, einen Weg aufzuzeigen, wie man der Verkürzung der Betriebszeit am Automobil einer hermetisch gekapselten Radelektronik der eingangs genannten Art entgegenwirken kann.

Zur Lösung dieser Aufgabe könnte man daran denken, zwischen der Batterie und den elektrischen Verbrauchern der Radelektronik einen Schalter vorzusehen, welcher während der Lagerzeit der Radelektronik geöffnet ist und erst bei der Verwendung der Radelektronik am Automobil geschlossen wird (US-A-4,734,674). Dem steht jedoch entgegen, daß die gesamte Radelektronik hermetisch verschlossen ist und dieses einer mechanischen Schalterbetätigung von außen entgegensteht. Man könnte ferner daran denken, einen Reed-Schalter oder dergleichen magnetisch betätigbaren Schalter vorzusehen, der durch Annähern eines starken Magneten an das Gehäuse der Radelektronik geschlossen werden kann. Eine derartige Lösung scheidet jedoch aus Gründen mangelnder Zuverlässigkeit aus: Ist der Schalter über längere Zeit offen, dann können sich auf den Kontaktoberflächen isolierende Schichten, z.B. Oxide und/oder Kunststoffe aus dem umgebenden Material, bilden, welche den Kontaktübergangswiderstand erhöhen, so daß die Gefahr besteht, daß nur eine unzuverlässige oder gar keine elektrische Verbindung mehr hergestellt werden kann. Außerdem enthält ein Schalter, auch ein Reed-Schalter, mindestens ein federndes Kontaktelement. Im Fahrbetrieb des Automobils ist die Radelektronik starken Vibrationsbelastungen ausgesetzt, die durch Materialermüdung zu einem Bruch eines Kontaktelementes führen können. Außerdem benötigt man für einen Schalter in der Radelektronik Platz, welcher unter den vorgegebenen Einbaubedingungen nur schwierig bereitzustellen ist. Schalter können zwar miniaturisiert werden, doch löst das die Aufgabe nicht, da kleinere Kontaktelemente eine geringere mechanische Belastbarkeit aufweisen und eine Miniaturisierung deshalb unweigerlich zu einem unzuverlässigen Betrieb führt. Wenn aber für die Batterie eine Betriebszeit von 7 bis 10 Jahren angestrebt wird, muß die Radelektronik im übrigen auch so zuverlässig sein, daß sie bei funktionierender Batterie nicht vorzeitig ihren Betrieb infolge einer Störung einstellt.

Die erfindungsgemäße Lösung der Aufgabe ist Gegenstand des Anspruchs 1. Vorteilhafte Weiterbildungen der Erfindung sind Gegenstand der abhängigen Ansprüche.

Die Erfindung löst die gestellte Aufgabe elegant dadurch, daß sie einen mechanischen Schalter, durch dessen Offenhalten ein Stromverbrauch während der Lagerzeit der Radelektronik verhindert werden könnte, für die Lösung des Problems gar nicht erst in Betracht zieht. Erfindungsgemäß wird vielmehr ein elektronischer Schalter, insbesondere ein Transistorschalter, verwendet, welcher in der Speiseleitung zwischen der Batterie und den Stromverbrauchern der Radelektronik liegt und während der Lagerzeit der Radelektronik sperrt. Zwar verbraucht ein elektronischer Schalter, während er sperrt, auch einen geringen Leckstrom, doch kann dieser so gering gehalten werden, daß er für die Dauer einer Lagerzeit von 1 bis 2 Jahren nicht ins Gewicht fällt. Es gibt handelsübliche Transistorschalter, deren Leckstrom viel kleiner ist als 1 µA. Um den elektronischen Schalter trotz eines hermetisch abgeschlossenen Gehäuses, welches für Schaltzwecke nicht geöffnet werden kann, von seinem gesperrten Zustand in seinen leitenden Zustand überführen zu können, ist erfindungsgemäß vorgesehen, daß der elektronische Schalter so eingesetzt wird, daß er sperrt, wenn er eine mit Masse verbundene Steuerelektrode hat, und daß er leitend wird, wenn die Masseverbindung zur Steuerelektrode unterbrochen wird. Damit ist die Möglichkeit eröffnet, die Masseverbindung durch eine am Gehäuse der Radelektronik vorzunehmende Maßnahme zu unterbrechen. In einer Ausführungsform der Erfindung könnte man einen Teil der Gehäusewand nachgiebig ausbilden und darunter einen Schnappschalter vorsehen, welcher durch Eindrücken des nachgiebigen Wandabschnitts - ohne daß der hermetische Abschluß des Gehäuses aufgehoben wird - geöffnet wird und geöffnet bleibt, weil seine Offen-Stellung eine stabile Stellung ist, beispielsweise infolge eines Schnapp-Mechanismus. Eine andere Möglichkeit besteht darin, unter der nachgiebigen Gehäusewand einen spröde ausgebildeten Abschnitt der Speiseleitung vorzusehen, welcher beim Eindrücken der nachgiebigen Gehäusewand aufbricht, wobei das Aufbrechen dadurch erleichtert werden kann, daß sich in der aufzubrechenden Leitung eine oder mehrere Sollbruchstellen befinden.

Besonders bevorzugt ist allerdings eine Ausbildung der Vorrichtung, bei welcher die Leitung, welche die Steuerelektrode mit Masse verbindet, hermetisch dicht durch die Gehäusewand nach außen geführt ist und teilweise auf der Außenseite des Gehäuses verläuft, so daß sie leicht unterbrochen werden kann. Daß die Stellen, an denen die Leitung unterbrochen wird, danach oxidieren oder sich sonst irgendwie verändern, ist unerheblich, da diese Leitung nach dem Unterbrechen funktionslos ist. Die Leitung könnte ein Stück weit durch elektrochemische Beschichtung oder mittels eines Leitlacks auf die Außenseite des Gehäuses aufgetragen sein; in diesem Fall könnte der außenliegende Abschnitt der Leitung mit einem scharfkantigen Werkzeug, mit einem Messer oder mit einem Schraubendreher, wenigstens teilweise weggeschabt werden. Eine andere vorteilhafte Möglichkeit besteht darin, den auf der Außenseite des Gehäuses verlaufenden Teil der Leitung, welche die Steuerelektrode mit Masse verbindet, so auszubilden, daß er eine sich von der Außenseite des Gehäuses entfernende Schleife aufweist, welche z.B. aus Kupferdraht gebildet sein könnte. Diese Schleife kann man nach Bedarf, wenn die Radelektronik am Rad montiert werden soll, abschneiden oder abbrechen, wozu die Schleife dicht an der Außenseite des Gehäuses vorzugsweise Sollbruchstellen aufweist. Um sicherzustellen, daß die Leitung, welche die Steuerelektrode mit Masse verbindet, vor dem Einbau der Radelektronik in ein Rad tatsächlich unterbrochen wird, ist in vorteilhafter Weiterbildung der Erfindung vorgesehen, das Gehäuse der Radelektronik abgestimmt auf die vorgegebenen Einbaubedingungen am Rad so zu bemessen, daß der Einbau in das Rad nur möglich ist, wenn die außenliegende Leiterschleife vorher abgebrochen worden ist, weil die Schleife andernfalls das Befestigen an der dafür vorgesehenen Stelle des Rades verhindern würde.

Ausführungsbeispiele der Erfindung sind schematisch in der beigefügten Zeichnung dargestellt.
- Figur 1: zeigt ein vereinfachtes Schaltbild der Erfindung,
- Figur 2: zeigt als Detail eine wegzubrechende Leiterschleife an der Außenseite des Gehäuses einer erfindungsgemäßen Vorrichtung,
- Figur 3: zeigt einen nachgiebig ausgebildeten Abschnitt der Außenwand des Gehäuses einer erfindungsgemäßen Vorrichtung mit einer aufbrechbaren Leiterbahn in geschlossenem Zustand und in
- Figur 4: in aufgebrochenem Zustand.

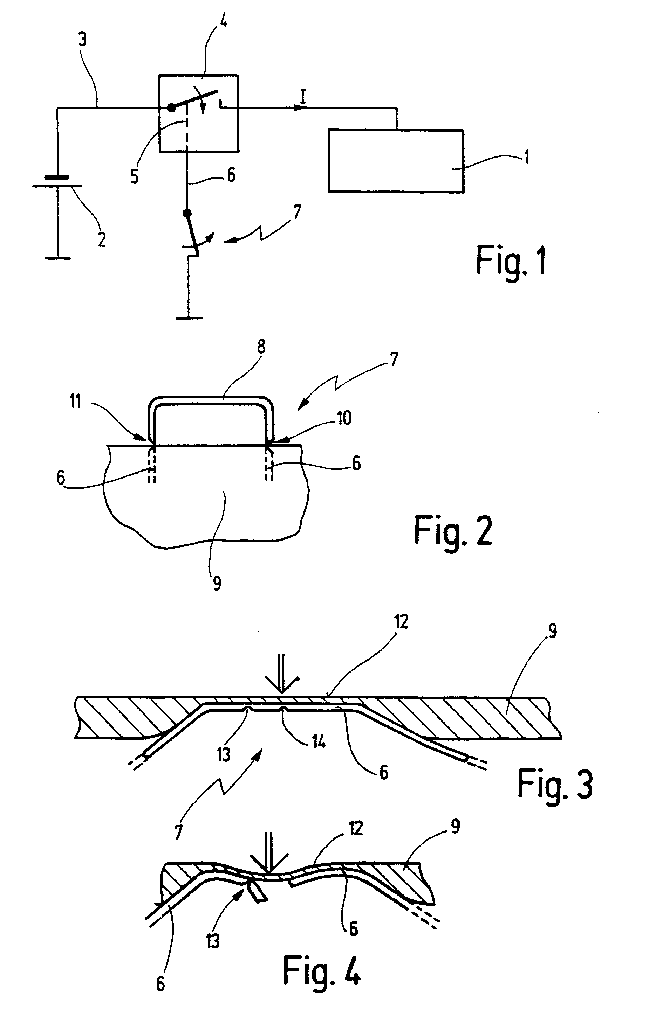

Figur 1 zeigt das stark vereinfachte Schaltbild einer Radelektronik mit einer Baugruppe 1, welche einen Drucksensor, einen Sender und eine elektronische Schaltung zum Betreiben des Drucksensors und des Sensors enthält. Ferner enthält die Radelektronik für die Stromversorgung der Baugruppe 1 eine Batterie 2, welche über eine Speiseleitung 3, in welcher ein Transistorschalter 4 liegt, mit der Baugruppe 1 verbunden ist. Der Transistorschalter hat eine Steuerelektrode 5, welche über eine Leitung 6 mit Masse verbunden ist. Solange die Steuerelektrode 5 an Masse liegt, befindet sich der Transistorschalter 4 in seinem gesperrten Zustand, wie in Figur 1 dargestellt. Wird die Leitung 6 unterbrochen, geht der Transistorschalter in seinen leitenden Zustand über und versorgt die Baugruppe 1 mit Strom. Zu diesem Zweck ist in der Leitung 6 ein Unterbrecher 7 vorgesehen, bei welchem es sich im Ausführungsbeispiel gemäß Figur 2 um eine Leiterschleife 8 handelt, welche sich außerhalb eines Gehäuses 9 befindet, in welchem sich die Baugruppe 1, die Batterie 2, der Transistorschalter 4 und die Speiseleitung 3 hermetisch eingeschlossen befinden. Die Leitung 6 ist zur Bildung der Leiterschleife 8 aus dem Gehäuse 9 herausgeführt und kann zu diesem Zweck in die Gehäusewand eingegossen sein. An den beiden Fußpunkten der Leiterschleife 8 auf der Gehäuseaußenseite ist jeweils eine Sollbruchstelle 10 und 11 vorgesehen, die ein Abbrechen der Leiterschleife 8 erleichtern. Die Abmessungen der Leiterschleife 8 und des Gehäuses 9 sind auf die vorgegebenen Einbaubedingungen der Radelektronik am Rad vorzugsweise so abgestimmt, daß der Einbau in das Rad erst erfolgen kann, nachdem die Leiterschleife 8 abgebrochen worden ist.

Eine andere Möglichkeit, die Leitung 7 trotz hermetisch abgeschlossenem Gehäuse 9 von außen her aufzubrechen, ist in den Figuren 3 und 4 dargestellt: In diesem Fall hat die Außenwand des Gehäuses 9 einen Abschnitt 12 mit verminderter Dicke; dieser Abschnitt kann durch Druck von außen, z.B. mit dem Finger, einwärts gedrückt werden. Auf der Innenseite der Gehäusewand, insbesondere in dem nachgiebig ausgebildeten Abschnitt 12, ist ein spröder Abschnitt der Leitung 6 geführt. Die Sprödigkeit könnte z.B. dadurch erreicht werden, daß man zur Bildung dieses spröden Abschnitts der Leitung 6 einen Leitlack verwendet, dessen bindende Komponente ein sprödes, leicht brechendes Kunstharz ist. Femer sind in der Leitung 6 zwei Sollbruchstellen 13 und 14 vorgesehen, welche das Aufbrechen der Leitung 6 bei Druck von außen erleichtern (Figur 4).

## Patentansprüche

1. Vorrichtung zur Reifendruckkontrolle an Automobilen mit einer zum Einbauen in ein Rad bestimmten Anordnung (1) aus einem Drucksensor, einem Sender und aus einer Schaltung zum Betreiben des Drucksensors und des Senders und mit einer Batterie (2), welche die Schaltung über eine Speiseleitung (3) mit Strom versorgt, wobei sich die Anordnung (1) und die Batterie (2) in einem geschlossenen Gehäuse (9) befinden,
**dadurch gekennzeichnet, daß** in der Speiseleitung (3) ein elektronischer Schalter (4) liegt, der eine Steuerelektrode (5) hat und sperrt, wenn die Steuerelektrode (5) mit Masse verbunden ist, wobei die Leitung (6) zwischen der Steuerelektrode (5) und der Masse zur Inbetriebnahme der Anordnung durch eine aus gekäuse (9) vorzunehmende Maβnahme unterbrechbar ist.

2. Vorrichtung nach Anspruch 1, **dadurch gekennzeichnet, daß** das Gehäuse (9) eine Gehäusewand mit einem nachgiebig ausgebildeten Abschnitt (12) hat, auf dessen Innenseite ein durch Eindrücken öffenbarer Unterbrecher (7) angeordnet ist welcher in der Leitung (6) liegt, welche die Steuerelektrode (5) mit Masse verbindet.

3. Vorrichtung nach Anspruch 1, **dadurch gekennzeichnet, daß** das Gehäuse (9) eine Gehäusewand mit einem nachgiebig ausgebildeten Abschnitt (12) hat, auf dessen Innenseite ein durch Eindrücken der Gehausewand aufbrechender Abschnitt der Leitung (6) angeordnet ist, welche die Steuerelektrode (5) mit Masse verbindet.

4. Vorrichtung nach Anspruch 3, **dadurch gekennzeichnet, daß** die Leitung (6), welche die Steuerelektrode (5) mit Masse verbindet, an dem nachgiebig ausgebildeten Abschnitt (12) der Gehäusewand eine oder mehrere Sollbruchstellen (13, 14) aufweist.

5. Vorrichtung nach Anspruch 1, **dadurch gekennzeichnet, daß** die Leitung (6), welche die Steuerelektrode (5) mit Masse verbindet, teilweise auf der Außenseite des Gehäuses (9) verläuft.

6. Vorrichtung nach Anspruch 5, **dadurch gekennzeichnet, daß** der auf der Außenseite des Gehäuses (9) verlaufende Teil der Leitung (6), welche die Steuerelektrode (5) mit Masse verbindet, eine sich von der Außenseite des Gehäuses (9) entfernende Schleife (8) aufweist.

7. Vorrichtung nach Anspruch 6, **dadurch gekennzeichnet, daß** die Schleife (8) dicht an der Außenseite des Gehäuses (9) Sollbruchstellen (10, 11) aufweist.

8. Vorrichtung nach Anspruch 6 oder 7, **dadurch gekennzeichnet, daß** das Gehäuse (9) mit der außenliegenden Schleife (8) abgestimmt auf die vorgegebenen Einbaubedingungen am Rad so bemessen ist, daß der Einbau in das Rad ein vorheriges Abbrechen der Schleife (8) zwingend erfordert.

## Claims

1. An apparatus for monitoring tire pressure on automobiles, having an arrangement (1), intended for installation into a wheel, made up of a pressure sensor, a transmitter, and a circuit for operating the pressure sensor and transmitter, and having a battery (2) which supplies the circuit with power via a power supply line (3), the arrangement (1) and the battery (2) being located in a sealed housing (9),
wherein there is located in the power supply line (3) an electronic switch (4) which has a control electrode (5) and is nonconductive when the control electrode (5) is connected to ground, where the tine (6) between the control electrode (5) and ground can be interrupted by a measure to be effected on the housing (9), for purposes of setting the arrangement into operation.

2. The apparatus as defined in Claim 1, wherein the housing (9) has a housing wall with a flexibly configured segment (12) on the inner side of which is arranged an interrupter (7) that can be opened by being pressed in and is located in the line (6) which connects the control electrode (5) to ground.

3. The apparatus as defined in Claim 1, wherein the housing (9) has a housing wall with a flexibly configured segment (12) on the inner side of which is arranged a segment of the line (6) connecting the control electrode (5) to ground that can be broken off by being pressed in.

4. The apparatus as defined in Claim 3, wherein the tine (6) which connects the control electrode (5) to ground has one or more defined break points (13, 14) on the flexibly configured segment (12) of the housing wall.

5. The apparatus as defined in Claim 1, wherein the line (6) which connects the control electrode (5) to ground runs partially on the outer side of the housing (9).

6. The apparatus as defined in Claim 5, wherein that portion of the line (6) connecting the control electrode (5) to ground which runs on the outer side of the housing (9) has a loop (8) standing out from the outer side of the housing (9).

7. The apparatus as defined in Claim 6, wherein the loop (8) has defined break points (10, 11) just next to the outer side of the housing (9).

8. The apparatus as defined in Claim 6 or 7, wherein the housing (9) with the externally located loop (8) is dimensioned, in accordance with the predefined installation conditions on the wheel, that installation into the wheel absolutely requires that the loop (8) first be broken off.

## Revendications

1. Dispositif pour le contrôle de la pression de bandages pneumatiques sur des véhicules automobiles, comprenant un agencement déterminé (1) à incorporer dans une roue, constitué par un capteur de pression, par un émetteur et par un circuit pour l'entraînement du capteur de pression et de l'émetteur, ainsi qu'une batterie (2) qui alimente le circuit en courant via un conducteur (3), l'agencement (1) et la batterie (2) se trouvant dans un boîtier fermé (9),
**caractérisé en ce que**, dans le conduit d'alimentation (3) est disposé un commutateur électronique (4) qui possède une électrode de commande (5) et qui a un effet de verrouillage lorsque l'électrode de commande (5) est reliée à la masse, la conduction (6) entre l'électrode de commande (5) et la masse pouvant être interrompue pour la mise en service de l'agencement via une mesure à prendre sur le boîtier (9).

2. Dispositif selon la revendication 1, **caractérisé en ce que** le boîtier (9) possède une paroi comportant une section (12) réalisée pour être flexible sur le côté interne de laquelle est disposé un interrupteur (7) qui peut être ouvert par poussée, qui est disposé dans le conducteur (6) qui relie l'électrode de commande (5) à la masse.

3. Dispositif selon la revendication 1, **caractérisé en ce que** le boîtier (9) possède une paroi comportant une section (12) réalisée pour être flexible sur le côté interne de laquelle est disposée une section du conducteur (6) apte à être rompue en enfonçant la paroi du boîtier, qui relie l'électrode de commande (5) à la masse.

4. Dispositif selon la revendication 3, **caractérisé en ce que** le conducteur (6), qui relie l'électrode de commande (5) à la masse, présente, sur la section (12) de la paroi du boîtier réalisée pour être flexible, un ou plusieurs points (13, 14) destinés à la rupture.

5. Dispositif selon la revendication 1, **caractérisé en ce que** le conducteur (6), qui relie l'électrode de commande (5) à la masse, s'étend en partie sur le côté externe du boîtier (9) .

6. Dispositif selon la revendication 5, **caractérisé en ce que** la partie du conducteur (6), qui relie l'électrode de commande (5) à la masse, s'étendant sur le côté externe du boîtier (9) présente une boucle (8) s'éloignant du côté externe du boîtier (9).

7. Dispositif selon la revendication 6, **caractérisé en ce que** la boucle (8) présente des points (10, 11) destinés à la rupture, disposés à proximité étroite du côté externe de boîtier (9).

8. Dispositif selon la revendication 6 ou 7, **caractérisé en ce que** le boîtier (9) avec sa boucle externe (9) est dimensionné de manière correspondante aux conditions d'incorporation prédéfinies sur la roue de telle sorte que l'incorporation dans la roue nécessite obligatoirement une rupture préalable de la boucle (8).
